# EUROPÄISCHE PATENTSCHRIFT

(11) **EP 1 789 276 B1**
(45) Veröffentlichungstag und Bekanntmachung des Hinweises auf die Patenterteilung: **22.04.2009**
(21) Anmeldenummer: 05790134.0
(22) Anmeldetag: 16.09.2005
(51) Int. Cl.: F02N 11/00, B60K 6/20, B60K 6/365, B60K 6/38, B60K 6/40, B60K 6/48, B60W 10/02, B60W 10/10, B60W 20/00, F02N 15/02

(54) **VERFAHREN ZUM STARTEN EINER BRENNKRAFTMASCHINE IN EINEM PARALLEL-HYBRID-ANTRIEBSSTRANG**
METHOD FOR STARTING AN INTERNAL COMBUSTION ENGINE IN A PARALLEL HYBRID DRIVE TRAIN
PROCEDE POUR FAIRE DEMARRER UN MOTEUR A COMBUSTION INTERNE DANS UN ENSEMBLE TRANSMISSION PARALLELE HYBRIDE

(30) Priorität: 18.09.2004 DE 102004045424
(43) Veröffentlichungstag der Anmeldung: 30.05.2007
(73) Patentinhaber: ZF FRIEDRICHSHAFEN Aktiengesellschaft, 88038 Friedrichshafen (DE)
(72) Erfinder: STEFFEN, Oliver, 96450 Coburg (DE); HEITMANN, Axel, 85049 Ingolstadt (DE)
(86) Internationale Anmeldenummer: PCT/EP2005/009964
(87) Internationale Veröffentlichungsnummer: WO 2006/029878

(56) Entgegenhaltungen:
- WO-A-99/22955
- DE-A1- 10 140 424
- DE-A1- 10 160 884
- FR-A- 2 837 429

## Beschreibung

Die Erfindung betrifft ein Verfahren zum Starten einer Brennkraftmaschine in einem Parallel-Hybrid-Antriebsstrang.

Aus der DE 101 40 424 A1 ist ein Verfahren zum Starten einer Brennkraftmaschine in einem Parallel-Hybrid-Antriebsstrang eines Kraftfahrzeuges bekannt. Dieser Antriebsstrang umfasst neben der Brennkraftmaschine ein automatisch schaltbares Getriebe, welches eine mit der Brennkraftmaschine verbindbare Antriebswelle und eine mit wenigstens einer Antriebsachse des Kraftfahrzeuges koppelbare Abtriebswelle aufweist, sowie ein mechanisches Schaltgetriebe mit einem ersten und einem zweiten Planetenradsatz, mehreren Kupplungen, mehreren Bremsen und einer Elektromaschine.

Diese Elektromaschine ist als Starter/Generator und/oder zum stufenlosen Verstellen des Getriebes und/oder zum elektrischen Fahrbetrieb des Kraftfahrzeuges betreibbar. Dazu ist die Elektromaschine mittels zwei der Kupplungen mit einer ersten Welle und/oder einer zweiten Welle des ersten Planetenradsatzes derartig verbindbar, dass bei rein elektrischem Fahrbetrieb und einer dabei geschlossenen Kupplung die Brennkraftmaschine durch Betätigen der anderen der zwei Kupplungen startbar ist. Hierbei wird durch das Schließen der anderen Kupplung das Starter-Drehmoment über die Sonnenradwelle des ersten Planetenradsatzes in diesen eingeleitet und auf die Antriebswelle geleitet, so dass die Brennkraftmaschine anspringen kann.

Mit zeitlichem Abstand nach diesem Anlassen kann die Elektromaschine über die eine der beiden Kupplungen mit der Brennkraftmaschine gekoppelt werden, so dass dann bei entsprechendem Fahrerwunsch ein Boost-Betrieb mit durch die Elektromaschine verstärktem Drehmoment erfolgen kann.

Bei diesem bekannten Verfahren erfolgt der Fahrbetrieb derartig, dass aus dem Stillstand ohne hydraulischen Wandler angefahren werden kann, wobei ein Sonnenrad der ersten Planetenradstufe über eine Sonnenradwelle mit einer Anfahrbremse verbindbar ist. Von den koaxial innerhalb der Elektromaschine angeordneten zwei Kupplungen wirkt die eine Kupplung mit dieser Sonnenradwelle wie oben beschrieben derart zusammen, dass nach dem Lösen der Anfahrbremse und dem Schließen dieser einen Kupplung das Starter-Drehmoment zum Anlassen der Brennkraftmaschine über die Sonnenradwelle in die erste Planetenradstufe geleitet wird.

Unter gewissen Umständen kann es bei diesem bekannten Verfahren zu zwar geringen, aber an sich unerwünschten Zugkraftunterbrechungen im Antriebsstrang kommen.

In der WO 99/22955 ist ein Hybrid-Antriebssystem angegeben, welches eine Brennkraftmaschine, ein Getriebe und zwischen Getriebe und Brennkraftmaschine eine Elektromaschine sowie mehrere Kupplungen aufweist. Eine dieser Kupplungen ermöglicht eine unmittelbare Verbindung zwischen der Elektromaschine und einer mit der Brennkraftmaschine verbundenen Antriebswelle, um Drehmoment direkt von der Elektromaschine zur Brennkaftmaschine zu übertragen.

Aus der DE 199 17 665 A1 ist es bei einem Hybrid-Antriebskonzept mit zwei Elektromaschinen bereits bekannt, zwecks Reduktion der Zugkraftunterbrechungsphase im rein elektrischen Fahrantrieb mittels einer ersten Elektromaschine die Brennkraftmaschine mittels einer zweiten Elektromaschine zu starten und dann in den Antriebsstrang einzukoppeln, wenn die Drehzahldifferenz zwischen der Brennkraftmaschine und der Getriebeeingangswelle sehr gering ist. Diese Lösungsmöglichkeit für das Problem der Zugkraftunterbrechung setzt jedoch zwei Elektromaschinen voraus.

Der Erfindung liegt daher die Aufgabe zugrunde, ein Verfahren zum Starten der Brennkraftmaschine derartig zu verbessern, dass eine Zugkraftunterbrechung deutlich reduziert ist oder vollständig vermieden wird.

Die gestellte Aufgabe wird gemäß den Merkmalen des Hauptanspruchs gelöst.

Vorteilhafterweise wird durch das erfindungsgemäße Verfahren die Brennkraftmaschine mit einem direkten Drehmomentenfluss von der schließenden Kupplung über die Antriebswelle gestartet, ohne Zwischenschaltung des ersten Planetenradsatzes und ohne dass hinterher, wie im Stand der Technik, eine weitere Kupplung zum Starten geschlossen werden muss. Solche Vorgänge führen in der Regel zu geringen Zugkraftunterbrechungen und zu geringen, aber spürbaren Schaltstößen, welche durch das Verfahren gemäß der Erfindung vermieden und doch hinsichtlich ihrer Dauer reduziert werden.

Vorteilhaft kann das Verfahren so ausgestaltet sein, dass die Elektromaschine mit dem Hohlrad des ersten Planetenradsatzes über diejenige Kupplung verbunden ist, welche beim Start der Brennkraftmaschine unmittelbar mit der Antriebswelle verbunden ist.

Ebenso vorteilhaft kann alternativ oder in Ergänzung dazu das Verfahren so weitergebildet sein, dass die Elektromaschine mit dem Sonnenrad des ersten Planetenradsatzes über die andere Kupplung der beiden Kupplungen verbunden ist.

Besonders bevorzugt ist es, wenn die beiden Kupplungen als Lamellenkupplungen ausgebildet sind und unabhängig voneinander schalt- oder regelbar sind.

In Abhängigkeit des jeweiligen Anwendungsfalles kann es jedoch auch vorteilhaft sein, wenn die unabhängig voneinander schaltbaren Kupplungen formschlüssig schließend ausgebildet sind.

Bevorzugt ist es, dass in einem Fahrbetrieb bei abgeschalteter Brennkraftmaschine ein Planetenträger des ersten Planetenradsatzes unter Vermittlung einer geschlossenen Kupplung über eine Bremse am Gehäuse des Getriebes abgestützt ist. Somit ist für den dann vorliegenden rein elektrischen Farbetrieb die notwendige Drehmomentabstützung in besonders einfacher Weise realisiert, und der sich daran anschließende Start der Brennkraftmaschine wird bezüglich der Betätigungsabfolge für die Schaltelemente positiv beeinflusst.

Diese günstige Betätigungsabfolge setzt sich dann fort, wenn diese Drehmomentabstützung in weiterer bevorzugter Verfahrensabfolge auch nach dem Start der Brennkraftmaschine erhalten bleibt, bis bevorzugt bei einer Schaltung in einen 3. Gang die verblockende Bremse gelöst wird.

Bei weiteren Hochschaltvorgängen kann es vorteilhaft sein, zur Vermeidung einer zu großen Anzahl von gleichzeitig zu betätigenden und dadurch eventuell den Schaltkomfort negativ beeinflussenden Schaltelementen, zunächst eine Zwischenschaltstufe ohne Änderung des Übersetzungsverhältnisses anzusteuern. Dies geschieht bevorzugt dadurch, dass zum Einlegen dieser Zwischenschaltstufe eine Kupplung schließt, welche das Hohlrad der ersten Planetenradstufe an den Planetenträger des zweiten Planetenradsatzes koppelt.

Günstige Drehmomenteinflüsse lassen sich dann einstellen, wenn sich in geschalteten Gängen des Antriebsstranges Übersetzungsverhältnisse von i = 2,74 und/oder i = 1,54 und/oder i = 1,0 und/oder i = 0,867 einstellen.

Weitere Vorteile und Merkmale ergeben sich aus dem nachfolgend anhand der beiliegenden Zeichnung näher erläuterten Ausführungsbeispiel. Darin zeigen
- Fig. 1: eine schematische Schnittdarstellung eines Getriebes in einer Anfahrstellung,
- Fig. 2: das Getriebe gemäß Fig.1 bei einem Direktstart einer Brennkraftmaschine,
- Fig. 3: das Getriebe gemäß Fig.1 in einem 2. Gang,
- Fig. 4: das Getriebe gemäß Fig.1 in einem 3. Gang,
- Fig. 5: das Getriebe gemäß Fig.1 in einem 4. Gang,
- Fig. 6: das Getriebe gemäß Fig.1 in einer Zwischenstufe, und
- Fig. 7: das Getriebe gemäß Fig.1 in einem 5. Gang.

Unterhalb der jeweiligen Figur ist in einer Tabelle durch ein Kreuz dargestellt, welche der nachfolgend erläuterten Schaltelemente, nämlich Kupplungen und Bremsen, jeweils geschlossen ist (mittlere Zeile), während in der unteren Zeile angegeben ist, welches dieser Schaltelement geöffnet ist. Ein aktueller Drehmomentenfluss ist in den Figuren zudem jeweils durch eine verstärkt ausgezogene Linie dargestellt.

Ein automatisch schaltbares Fahrzeuggetriebe 1 ist Teil eines Parallel-Hybrid-Antriebsstranges eines nicht näher gezeigten Kraftfahrzeuges. Dieses Getriebe 1 umfasst eine Antriebswelle 2, welche eingangsseitig beispielsweise über einen Torsionsdämpfer mit einer nicht dargestellten Brennkraftmaschine des Antriebsstranges in Verbindung steht.

Ausgangsseitig ist am Getriebe 1 eine Abtriebswelle 3 vorhanden, welche mit mindestens einer Fahrzeugachse antriebsverbindbar ist. Zwischen den beiden genannten Wellen 2 und 3 ist ein Schaltgetriebe 4 angeordnet, welches aus einer ersten Getriebestufe (erster Planetenradsatz 5), und einer zweiten Getriebestufe (zweite Planetenradstufe 6), mit mehreren Kupplungen K1, K2, K3 und zwei Bremsen B1 und B2 besteht.

Die erste Getriebestufe besteht beispielsweise aus einem einfachen Planetenradsatz 5, welcher einem Ravigneaux-Satz 6 als zweite Getriebestufe vorgeschaltet ist. Eine derartige Anordnung ermöglicht beispielsweise ein Stufenautomatgetriebe mit sechs Vorwärtsgängen und einem Rückwärtsgang.

Ein Sonnenrad 17 des ersten Planetenradsatzes 5 ist über eine Sonnenradwelle 18 mit einer Anfahrbremse B3 verbunden, so dass das mit diesem Getriebe 1 ausgerüstete Fahrzeug ohne hydrodynamischen Wandler anfahren kann.

Zudem ist eine Elektromaschine 14 vorhanden, welche als Startet Generator ausgebildet ist, wobei dieser Elektromaschine 14 ferner ein nicht gezeigtes, elektronisches Steuerungssystem und ein Energiespeicher 7 zugeordnet ist.

Durch die Kombination des Schaltgetriebes 4 mit der Elektromaschine 14 ist somit ein eletctromotorisches Anfahren des damit ausgerüsteten Fahrzeugs aus der Neutralstellung eines Getriebewählhebels möglich.

Zwischen der Elektromaschine 14 einerseits sowie der mit einem Hohlrad 20 des ersten Planetenradsatzes 5 verbundenen Antriebswelle 2 und der Sonnenradwelle 18 andererseits sind eine vierte Kupplung K4 und eine fünfte Kupplung K5 angeordnet.

Während des Fahrbetriebs können durch den drehzahlvariablen Eingriff der elektrischen Maschine 14 auf die Sonnenradwelle 18 nicht nur sechs Vorwärtsgänge mit festen Übersetzungen, sondern auch fünf Vorwärtsfahrbereiche mit stufenlos veränderlicher Motordrehzahl gewählt werden.

Während des Fahrbetriebs und insbesondere Bremsbetriebs des Fahrzeugs kann weiterhin mit der Elektromaschine 14 eine Energie-Rekuperation durchgeführt werden, indem elektrische Energie in dem symbolisch dargestellten Energiespeicher 7 zwischengespeichert wird. Eine Pfeilrichtung 8 gibt an, ob die Elektromaschine 14 Energie in den Energiespeicher 7 einspeist oder aus diesem entnimmt.

Mit einem derartigen Fahrzeuggetriebe kann ein rein elektrischer Fahrbetrieb sowohl vorwärts als auch rückwärts z. B. in Innenstädten oder anderen Zonen realisiert werden, wo ein emissionsfreier Betrieb gewünscht ist.

Das Hohlrad 20 des ersten Planetenradsatzes 5 ist über eine Hohlradwelle 21 mit der Antriebswelle 2 in ständiger Verbindung. Die Planetenräder 22 sind mit einem Planetenträger 23 verbunden, welcher über die Kupplungen K1, K2 und K3 mit dem zweiten Planetenradsatz 6 verbindbar oder über die Bremse B2 mit einem Gehäuse 34 des Getriebes 1 verblockbar ist.

Der zweite, doppelte Planetenradsatz 6 besteht im wesentlichen aus einem ersten Sonnenrad 24 und einem zweiten Sonnenrad 25, welche über eine erste Sonnenradwelle 26 sowie über eine zweite Sonnenradwelle 27 mit dem ersten Planetenradsatz 5 verbindbar oder über die Bremse B1 mit dem Gehäuse 34 verblockbar sind.

Ein Satz erster Planetenräder 28 ist an einem ersten Planetenträger 30 gelagert, welcher Planetenträger 30 mittels der Bremse B1 mit dem Gehäuse 34 verblockbar ist. Sowohl die ersten Planetenräder 28 als auch zweite Planetenräder 29 sind über einen zweiten Planetenträger 31 und eine Zwischenwelle 32 mit dem ersten Planetenradsatz 5 verbindbar. Ein Hohlrad 33 des zweiten Planetenradsatzes 6 ist direkt verbunden mit der Abtriebswelle 3 des Fahrzeuggetriebes 1.

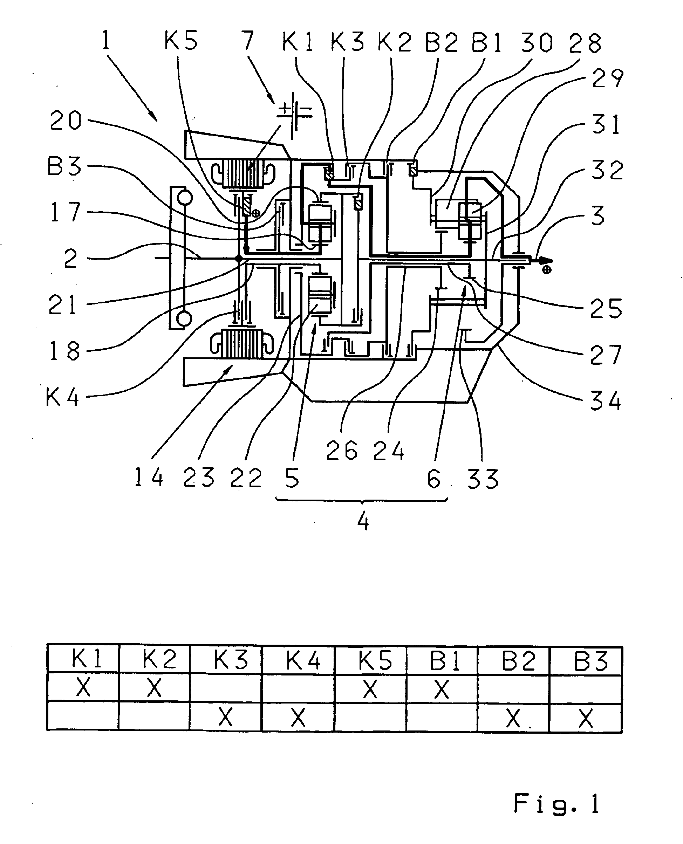

Gemäß Fig. 1 befindet sich die Brennkraftmaschine im ausgeschalteten Zustand; das Fahrzeug wird in diesem Zustand rein elektromotorisch bewegt. Die Kupplungen K1, K2 und die Bremse B1 sind geschlossen, während die Kupplungen K3 und K4 geöffnet sind.

Vom ersten Planetenradsatz 5 ist das Hohlrad 20 aus Gründen der notwendigen Drehmomentabstützung über die geschlossene Kupplung K2 und die ebenfalls geschlossene Bremse B1 festgebremst. Die Kupplung K5 ist ebenfalls geschlossen. Somit kann unter Entnahme von elektrischer Energie aus dem Energiespeicher 7 das Antriebsdrehmoment über die geschlossene Kupplung K5, die Sonnenradwelle 18, den Planetenträger 23 und die Kupplung K1, über die dem zweiten Planetenradsatz 6 zugeordnete zweite Sonnenradwelle 27, über den mittels Bremse B1 festgebremsten Planetenträger 30 des zweiten Planetenradsatzes 6, dessen Planetenräder 29 und das zugehörige Hohlrad 33 auf die Abtriebswelle 3 übertragen werden.

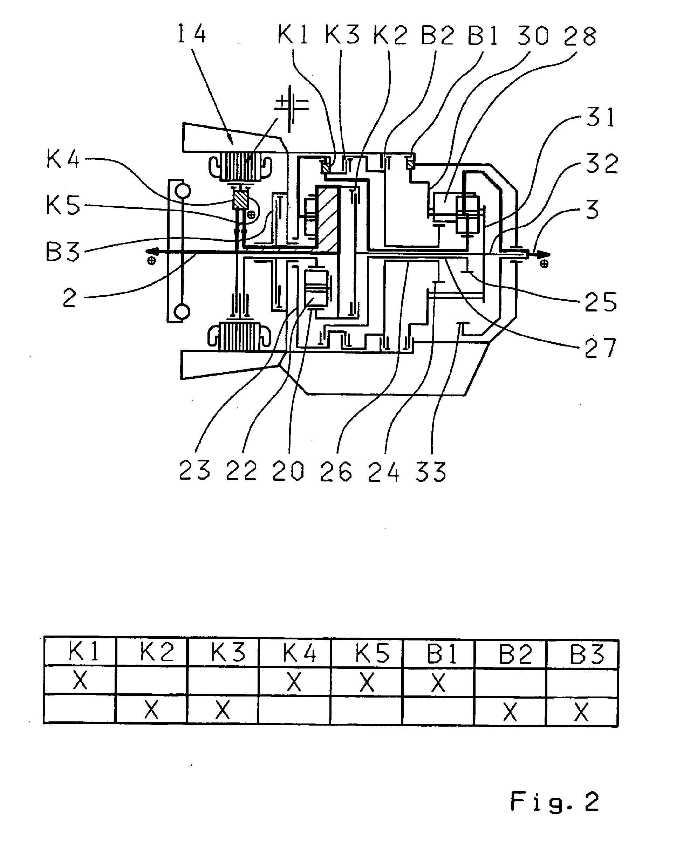

Erfindungsgemäß wird gemäß Fig. 2 die Brennkraftmaschine gestartet, indem die Kupplung K2 öffnet und die Kupplung K4 schließt. Somit sind die beiden der Elektromaschine 14 zugeordneten Kupplungen K4 und K5 geschlossen. Der Momentenpfad ist, bezogen auf den Ausgangspunkt Kupplung K5, identisch zu der in Fig. 1 gezeigten Situation, jedoch wird über die nun geöffnete Kupplung K2 ein Teil dieses Drehmomentes über das freigegebene Hohlrad 20 der Antriebswelle 2 zugeführt, ebenso wie das mittels der nun geschlossenen Kupplung K5 von der Elektromaschine 14 auf diese Antriebswelle 2 übertragene Drehmoment.

Das Übersetzungsverhältnis beträgt nun i = 2,74 und ist damit dem des 2. Ganges des bekannten Basisgetriebes 6HP26 mit i = 2,34 sehr ähnlich.

Da der Eingangsplanetenradsatz 5 zunächst über die Kupplungen K4 und K5 verblockt bleibt, unterscheiden sich auch die weiteren Übersetzungsverhältnisse nur marginal von denen des Basisgetriebes. Zudem sind durch die Kombination des ersten und zweiten Planetenradsatzes 5 und 6 zwei zusätzliche Vorwärts- und ein zusätzlicher Rückwärtsgang schaltbar.

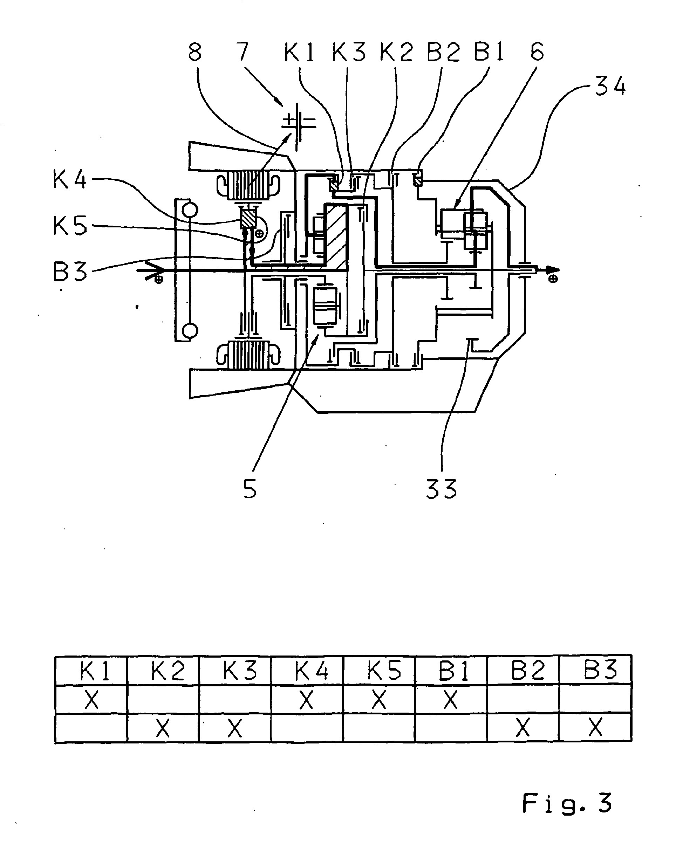

Der sich nach dem Starten der Brennkraftmaschine einstellende Zustand ist in Fig. 3 dargestellt. An der der Fig. 3 zugeordneten Tabelle hat sich gegenüber Fig. 2 nichts geändert Die Brennkraftmaschine treibt nun das Fahrzeug im 2. Gang an; es muss keine weitere Kupplung mehr geschaltet werden. Die Elektromaschine 14 kann nun als Generator betrieben werden und speist Energie in den Energiespeicher 7 ein (Pfeil 8).

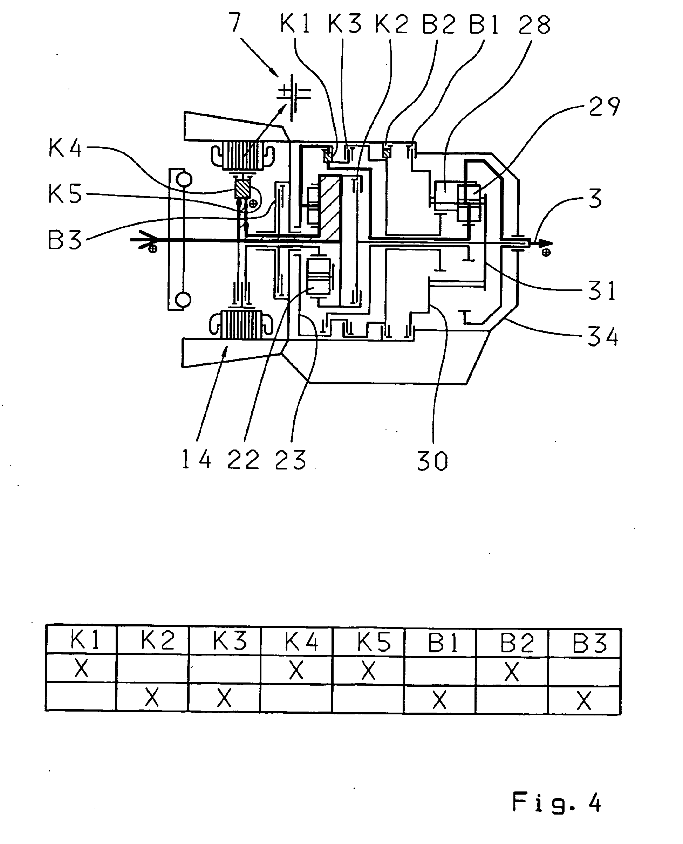

Um in den 3. Gang zu schalten, wird nun gemäß Fig. 4 Bremse B2 geschlossen und B1 geöffnet. Hierdurch ist der Planetenträger 30 des zweiten Planetenradsatzes 6 freigegeben und das Übersetzungsverhältnis sinkt auf i = 1,54, im Vergleich zu i = 1,521 des Basisgetriebes 6HP26.

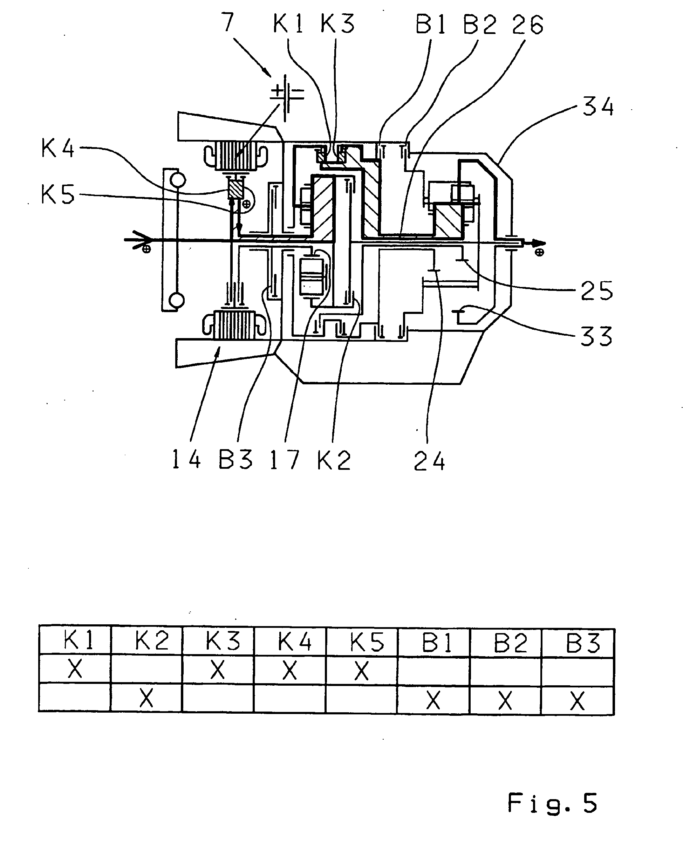

Ist der 3. Gang durchfahren, so wird gemäß Fig. 5 durch erneutes Offnen der Bremse B2 und Schließen der Kupplung K3 der 4. Gang geschaltet. Das Übersetzungsverhältnis wird direkt, d.h. i = 1,0, das ähnliche Basisgetriebe hat in diesem 4. Gang i = 1,143.

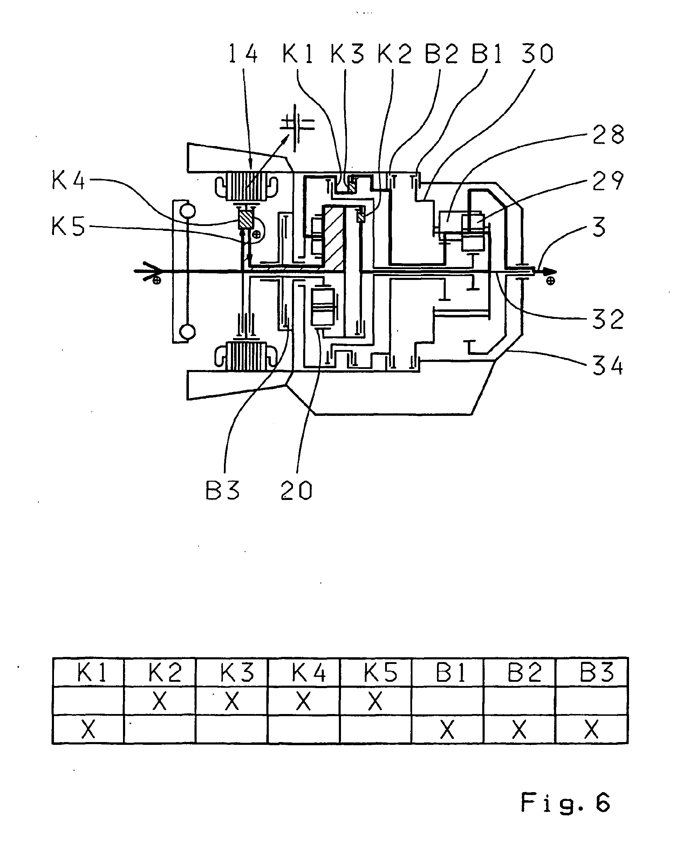

Für die nächsthöhere Gangstufe, den 5. Gang, müssten für eine Direktschaltung insgesamt vier der Schaltelemente zugleich betätigt werden. Um dies zu vermeiden und einen Gangwechsel ohne Komforteinbußen zu realisieren, wird daher eine in Fig. 6 angezeigte Zwischenschaltstufe realisiert, in welcher ebenfalls i = 1,0 gilt. Dazu ist Kupplung K1 geöffnet und Kupplung K2 geschlossen, wodurch der Drehmomentenfluss zusätzlich vom Hohlrad 20 über die damit mittels der Kupplung K2 angekoppelte Zwischenwelle 32 auf den Planetenträger 31 des Planetenradsatzes 6 übertragen wird.

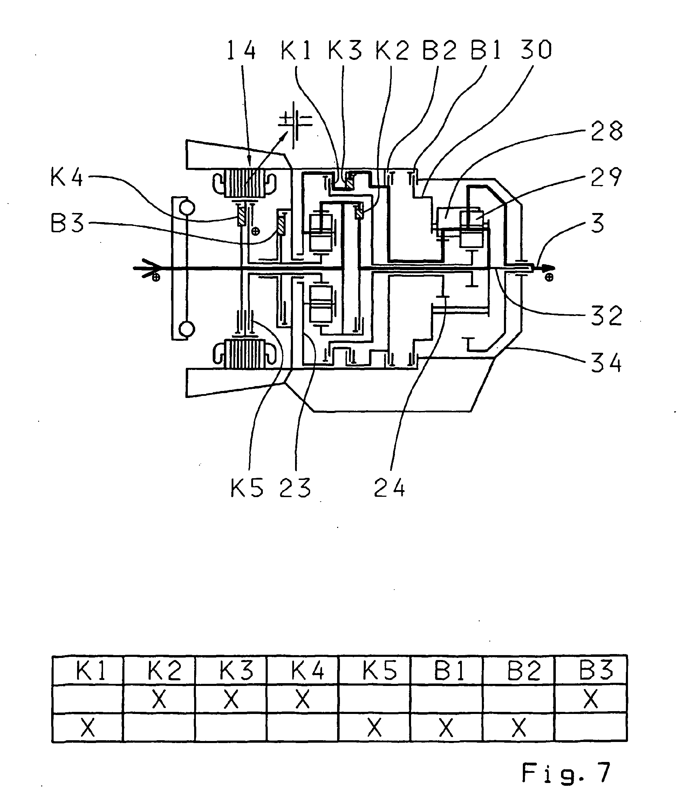

Erst danach wird durch Öffnen der Kupplung K5 und Schließen der Anfahrbremse B3 in den 5. Gang mit i = 0,867 geschaltet, welches dem Übersetzungsverhältnis des Basisgetriebes 6HP26 entspricht (Fig. 7).

Weitere Hochschaltstufen können anschließend wie bei dem bekannten Basisgetriebe durchgeführt werden und sind daher hier nicht näher erläutert.

Durch den erfindungsgemäßen Einsatz der zwei Kupplungen K 4 und K5 ist die Elektromaschine 14 über die Kupplung K4 für das Anlassen der Brennkraftmaschine unmittelbar mit der Antriebswelle 2 verbunden. Die Antriebswelle 2 wiederum steht dabei in unmittelbarer Antriebsverbindung mit der Kurbelwelle der Brennkraftmaschine. Dadurch können die bekannten Vorteile des vorbeschriebenen Fahrzeuggetriebes 1 mit einem mechanischen Schaltgetriebe 4 und einer elektrischen Maschine 14, nämlich einem Fahrer auf Wunsch eine Verstärkung des Antriebsdrehmoments zu ermöglichen, so dass ein uneingeschränkter Boost-Betrieb möglich ist, um den Vorteil ergänzt werden, dass das Anlassen komfortabel und ohne spürbare Zugkraftunterbrechung durchgeführt werden kann.

Ferner steht durch eine derartige Verschaltung eine permanente elektrische Versorgung des elektrischen Bordnetzes im Generatorbetrieb der Elektromaschine 14 zur Verfügung.

### Bezunszeichen

- 1: Fahrzeuggetriebe
- 2: Antriebswelle
- 3: Abtriebswelle
- 4: Schaltgetriebe
- 5: erster Planetenradsatz
- 6: zweiter Planetenradsatz
- 7: Energiespeicher
- 8: Pfeilrichtung
- 14: Elektromaschine
- 17: Sonnenrad
- 18: Sonnenradwelle
- 20: Hohlrad
- 21: Hohlradwelle
- 22: Planetenrad
- 23: Planetenträger
- 24: erstes Sonnenrad
- 25: zweites Sonnenrad
- 26: erste Sonnenradwelle
- 27: zweite Sonnenradwelle
- 28: erste Planetenräder
- 29: zweite Planetenräder
- 30: erster Planetenträger
- 31: zweiter Planetenträger
- 32: Zwischenwelle
- 33: Hohlrad
- 34: Gehäuse
- K1: erste Kupplung
- K2: zweite Kupplung
- K3: dritte Kupplung
- K4: vierte Kupplung
- K5: fünfte Kupplung
- B1: erste Bremse
- B2: zweite Bremse
- B3: Anfahrbremse

## Patentansprüche

1. Verfahren zum Starten einer Brennkraftmaschine in einem Parallel-Hybrid-Antriebsstrang eines Kraftfahrzeuges aus einem ausgeschalteten Zustand, wobei
- der Antriebsstrang neben der Brennkraftmaschine eine Elektromaschine (14) und ein in einem Gehäuse (34) angeordnetes automatisch schaltbares Getriebe (1) umfasst, welches aufweist
- eine Antriebswelle (2), welche mit der Brennkraftmaschine verbindbar ist,
- eine mit wenigstens einer Antriebsachse des Kraftfahrzeuges verbindbare Abtriebswelle (3) und
- ein mechanisches Schaltgetriebe (4) mit einem über sein Hohlrad (20) direkt mit der Antriebswelle (2) verbundenen ersten Planetenradsatz (5) und einem über sein Hohlrad (33) direkt mit der Abtriebswelle (3) verbundenen zweiten Planetenradsat-z (6), mehrere Kupplungen sowie mehrere Bremsen zum Verblocken der Planetenradsätze (5, 6) mit dem Gehäuse (34), wobei das Hohlrad (20) des ersten Planetenradsetzes (5) über eine Kupplung (K2) mit dem zweiten Planetenradsatzes (6) verbindbar ist,
- die Elektromaschine (14) über eine Kupplung (K4) direkt mit der Antriebswelle (2) und über eine weitere Kupplung (K5) direkt mit der Sonnenradwelle (18) des ersten Planetenradsatzes (5) verbindbar ist,
- im ausgeschaltetem Zustand der Brennkraftmaschine bei rein elektrischem Fahrbetrieb die Kupplung (K4) geöffnet ist, während die Kupplungen (K5 und K2) und die Bremse (B1) geschlossen sind, wobei das Hohlrad (20) des ersten Planetenradsatzes (5) über die geschlossene Kupplung (K2) und die geschlossene Bremse (B1) festgebremst ist, bei welchem Verfahren die Kupplung (K4) geschlossen und zur Freigabe des Hohlrades (20) die Kupplung (K2) geöffnet wird, dass der Antriebswelle (2) über die geschlossene Kupplung (K4) und über das freigegebene Hohlrad (20) von der Elektromaschine (14) Drehmoment zugeführt wird.

2. Verfahren nach Anspruch 1, **dadurch gekennzeichnet, dass** die beiden Kupplungen (K4 und K5) als Lamellenkupplungen ausgebildet und unabhängig voneinander schalt- und regelbar sind.

3. Verfahren nach Anspruch 1 oder 2, **dadurch gekennzeich**n e t , dass die beiden Kupplungen (K4 und K5) als formschlüssige Kupplungen schließbar und unabhängig voneinander schaltbar sind.

4. Verfahren nach wenigstens einem der vorherigen Ansprüche, **dadurch gekennzeichnet, dass** in einem Fahrbetrieb bei abgeschalteter Brennkraftmaschine ein Planetenträger des ersten Planetenradsatzes unter Vermittlung einer geschlossenen Kupplung über eine Bremse am Gehäuse des Getriebes abgestützt ist.

5. Verfahren nach Anspruch 4, **dadurch gekennzeichnet, dass** der Planetenträger auch nach dem Starten der Brennkraftmaschine am Gehäuse verblockt bleibt.

6. Verfahren nach Anspruch 5, **dadurch gekennzeichnet, dass** die den Planetenträger verblockende Bremse geöffnet wird, um in einen 3. Gang zu schalten.

7. Verfahren nach Anspruch ei, **dadurch gekennzeichnet, dass** für einen weiteren Schaltvorgang in einen Gang oberhalb des 3. Ganges zunächst eine Zwischenschaltstufe ohne Änderung des Übersetzungsverhättnisses angesteuert wird.

8. Verfahren nach Anspruch 7, **dadurch gekennzeichnet, dass** zum Einlegen der Zwischenschaltstufe eine Kupplung schließt, welche das Hohlrad der ersten Planetenradstufe an den Planetenträger des zweiten Planetenradsatzes koppelt.

9. Verfahren nach wenigstens einem der vorherigen Ansprüche, **dadurch gekennzeichnet, dass** sich in geschalteten Gängen des Antriebsstranges Übersetzungsverhältnisse von i = 2,74 und/oder i = 1,54 und/oder i = 1,0 und/oder i = 0,867 einstellen.

## Claims

1. Method for starting an internal combustion engine in a parallel hybrid drivetrain of a motor vehicle from a shut-down state, with
- the drivetrain comprising, in addition to the internal combustion engine, an electric machine (14) and an automatically shiftable transmission (1) which is arranged in a housing (34) and which has
- a drive input shaft (2) which can be connected to the internal combustion engine,
- a drive output shaft (3) which can be connected to at least one drive axle of the motor vehicle, and
- a mechanical shift transmission (4) with a first planetary gear set (5) which is connected, by means of the ring gear (20) thereof, directly to the drive input shaft (2), and with a second planetary gear set (6) which is connected, by means of the ring gear (33) thereof, directly to the drive output shaft (3), a plurality of clutches and a plurality of brakes for blocking the planetary gear sets (5, 6) with the housing (34), with it being possible for the ring gear (20) of the first planetary gear set (5) to be connected by means of a clutch (K2) to the second planetary gear set (6),
- with it being possible for the electric machine (14) to be directly connected by means of a clutch (K4) to the drive input shaft (2) and by means of a further clutch (K5) to the sun gear shaft (18) of the first planetary gear set (5),
- wherein in the shut-down state of the internal combustion engine during purely electrical driving operation, the clutch (K4) is open, while the clutches (K5 and K2) and the brake (B1) are closed, with the ring gear (20) of the first planetary gear set (5) being fixedly braked by means of the closed clutch (K2) and the closed brake (B1),
in which method the clutch (K4) is closed and, to release the ring gear (20), the clutch (K2) is opened, in that torque is supplied to the drive input shaft (2) from the electric machine (14) via the closed clutch (K4) and via the released ring gear (20).

2. Method according to Claim 1, **characterized in that** the two clutches (K4 and K5) are designed as multiplate clutches and can be shifted and regulated independently of one another.

3. Method according to Claim 1 or 2,
**characterized in that** the two clutches (K4 and K5) can be closed as positively-locking clutches and can be shifted independently of one another.

4. Method according to at least one of the preceding claims, **characterized in that**, in driving operation with the internal combustion engine shut down, a planet carrier of the first planetary gear set is supported, with the interposition of a closed clutch, via a brake on the housing of the transmission.

5. Method according to Claim 4, **characterized in that** the planet carrier remains blocked on the housing even after the internal combustion engine is started.

6. Method according to Claim 5, **characterized in that** the brake which blocks the planet carrier is opened in order to shift into a 3^{rd} gear.

7. Method according to Claim 6, **characterized in that**, for a further shift process into a gear above the 3^{rd} gear, an intermediate shift stage is firstly activated without a change in the transmission ratio.

8. Method according to Claim 7, **characterized in that**, to engage the intermediate shift stage, a clutch which couples the ring gear of the first planet gear stage to the planet carrier of the second planetary gear set is closed.

9. Method according to at least one of the preceding claims, **characterized in that**, in engaged gears of the drivetrain, transmission ratios of i = 2.74 and/or i = 1.54 and/or i = 1.0 and/or i = 0.867 are set.

## Revendications

1. Procédé pour faire démarrer un moteur à combustion interne dans un ensemble de transmission parallèle hybride d'un véhicule automobile à partir d'un état coupé, dans lequel :
- l'ensemble de transmission comprend, en plus du moteur à combustion interne, un moteur électrique (14) et une boîte de vitesses (1) à changement de vitesse automatique disposée dans un carter (34), qui présente
- un arbre d'entraînement (2) qui peut être connecté au moteur à combustion interne,
- un arbre de sortie (3) pouvant être connecté à au moins un axe d'entraînement du véhicule automobile et
- une boîte de vitesses (4) à changement de vitesse mécanique comprenant un premier train planétaire (5) connecté directement par le biais de sa couronne (20) à l'arbre d'entraînement (2) et un deuxième train planétaire (6) connecté directement par le biais de sa couronne (33) à l'arbre de sortie (3), plusieurs embrayages ainsi que plusieurs freins pour bloquer les trains planétaires (5, 6) au carter (34), la couronne (20) du premier train planétaire (5) pouvant être connectée par le biais d'un embrayage (K2) au deuxième train planétaire (6),
- le moteur électrique (14) pouvant être connecté directement par le biais d'un embrayage (K4) à l'arbre d'entraînement (2) et directement par le biais d'un autre embrayage (K5) à l'arbre de la roue solaire (18) du premier train planétaire (5),
- dans l'état coupé du moteur à combustion interne, lorsque le mode de fonctionnement est exclusivement électrique, l'embrayage (K4) étant ouvert tandis que les embrayages (K5 et K2) et le frein (B1) sont fermés, la couronne (20) du premier train planétaire (5) étant freinée à l'arrêt par le biais de l'embrayage fermé (K2) et du frein fermé (B1),
l'embrayage (K4), dans ce procédé, étant fermé et l'embrayage (K2) étant ouvert pour libérer la couronne (20), l'arbre d'entraînement (2) recevant un couple par le biais de l'embrayage (K4) fermé et par le biais de la couronne libérée (20) du moteur électrique (14).

2. Procédé selon la revendication 1, **caractérisé en ce que** les deux embrayages (K4 et K5) sont réalisés sous forme d'embrayages à disques et peuvent être commutés et réglés indépendamment l'un de l'autre.

3. Procédé selon la revendication 1 ou 2, **caractérisé en ce que** les deux embrayages (K4 et K5) sont réalisés sous forme d'embrayages à engagement par correspondance géométrique qui peuvent être fermés et commutés indépendamment l'un de l'autre.

4. Procédé selon au moins l'une quelconque des revendications précédentes, **caractérisé en ce que** dans un mode de conduite, lorsque le moteur à combustion interne est coupé, un porte-satellites du premier train planétaire est supporté par l'intermédiaire d'un embrayage fermé par le biais d'un frein sur le carter de la boîte de vitesses.

5. Procédé selon la revendication 4, **caractérisé en ce que** le porte-satellite reste également bloqué sur le carter après le démarrage du moteur à combustion interne.

6. Procédé selon la revendication 5, **caractérisé en ce que** le frein bloquant le porte-satellites est ouvert afin de passer en 3^{e} vitesse.

7. Procédé selon la revendication 6, **caractérisé en ce que** pour une autre opération de changement de vitesse dans une vitesse au-dessus de la 3^{e} vitesse, un étage de changement de vitesse intermédiaire est d'abord sélectionné sans changer le rapport de démultiplication.

8. Procédé selon la revendication 7, **caractérisé en ce que** pour enclencher l'étage de changement de vitesse intermédiaire, un embrayage est fermé, lequel accouple la couronne du premier train planétaire au porte-satellites du deuxième train planétaire.

9. Procédé selon au moins l'une quelconque des revendications précédentes, **caractérisé en ce que** dans les vitesses commutées de l'ensemble de transmission, des rapports de démultiplications de i = 2,74 et/ou i = 1,54 et/ou i = 1,0 et/ou i = 0,867 s'établissent.
